# EUROPEAN PATENT SPECIFICATION

(11) **EP 0 382 333 B1**
(45) Date of publication and mention of the grant of the patent: **30.06.1993**
(21) Application number: 90300073.5
(22) Date of filing: 04.01.1990
(51) Int. Cl.: F01D 11/02, F16J 15/44, F01D 25/16

(54) **Mounting arrangement of segmental members in rotary machines**
Befestigung und Anordnung von segmentförmigen Elementen in Turbomaschinen
Arrangement des éléments en forme de segment dans des machines rotoriques

(30) Priority: 09.01.1989 GB 8900404; 09.06.1989 GB 8913282
(43) Date of publication of application: 16.08.1990
(73) Proprietor: NORTHERN ENGINEERING INDUSTRIES PLC, Newcastle upon Tyne NE3 3SB (GB)
(72) Inventor: Simpson, John, Monkseaton Tyne & Wear (GB)
(74) Representative: Gura, Henry Alan

(56) References cited:
- EP-A- 0 276 839
- DE-B- 1 079 406
- DE-C- 484 540
- FR-A- 2 228 967
- GB-A- 763 373
- GB-A- 2 075 614
- GB-A- 2 219 355
- US-A- 3 473 853
- US-A- 3 847 403
- US-A- 4 135 851
- PATENT ABSTRACTS OF JAPAN vol. 8, no. 54 (M-282)(1491) 10 March 1984,& JP-A-58 206805 (MIHARU FUKAZAWA) 02 December 1983,
- PATENT ABSTRACTS OF JAPAN vol. 8, no. 54 (M-282)(1491) 10 March 1984,& JP-A-58 206806 (MIHARU FUKAZAWA) 02 December 1983,

## Description

This invention relates to mounting arrangements for the relative location of parts in a rotary machine, eg. to establish a rotary seal or to accommodate static clearances.

Rotary machines such as engines, including turbines, and pumps, including compressors and fans, are often required to have clearance seals between parts that rotate relative to each other, in order not to create friction losses and, in some cases, to accommodate relative thermal expansion. Labyrinth seals are commonly employed for this purpose.

These sealing arrangements may also have to cater for a greater or lesser degree of eccentricity between the centres of the relative rotating parts and to minimise clearances it is known to provide a series of separate sealing segments that are displaceably mounted so as to move radially relative to each other in order to permit closer conformity with an eccentric rotating shaft or the like. Where a pressure gas or vapour seal is being affected, this kind of mounting may be required primarily to hold the segments in place during start-up until differential pressure builds up across the seal to provide a radial closing force.

Examples of non-contacting seals in which resilient means are provided to allow the seals to deflect if contact occurs can be seen in FR-A-2 228 967 and DE-B-1 079 406. In a further example disclosed in GB-A-763 373, the seal segments are urged towards their operating positions by respective leaf springs each of substantially the same angular extent as its segment, which bears against the middle of the spring while the opposite ends of the spring bear on the outer wall of a recess in which the segment is located.

The space occupied by the known displaceable sealing arrangements is considerably greater than is required for a fixed clearance seal, in particular, as regards the dimension in the direction of displacement. For example, a rotary sealing arrangement is known in which a ring of radially displaceable seal segments are held in a circumferential slot in a housing and are urged radially inwards from the slot by a series of cylindrical coil springs mounted with their central axes radial to the centre of rotation, pockets being provided to hold the springs and support them against buckling. Inevitably, the overall radial depth of the segments:spring combination is considerably greater than a conventional fixed segmented seal design. Furthermore, there are practical limitations in most cases that restrict the balancing force that such a sprung arrangement can provide for the seal segments.

The space requirements of displaceable seal segments pose a particular problem when, as part of an up-rating programme, an existing machine is required to have fixed seals replaced by displaceable seals. Such work is not uncommon on larger machines such as steam turbines of power generation plant. The reconfiguration of original components such as turbine cylinders, even when this can be done simply by remachining them, can be extremely costly in terms of time and machine availability, while the complexity of the displaceable sealing arrangements and the presence of numerous small components make their assembly into a machine a slow process.

Another problem can arise in rotary machines if, to allow for relative expansion, vibration effects and the like, components may fit only slackly until the machine is driven up to speed. Prolonged slow-running of the machine may then produce movements at these slack fittings that lead to accelerated wear and damages.

According to one aspect of the present invention, a mounting arrangement for the relative location of parts of a rotary machine comprises a plurality of segmental members held in a circumferential recess in a carrier forming one of said parts, from which they project with limited displaceability in their direction of projection, resilient means in said recess bearing on the segmental members to urge them towards one end position in the direction of said displaceability, said resilient means being in the form of at least one circumferentially elongate spring having in a plane containing the axis of rotation a radial cross-section that is substantially smaller in the direction of said displaceability than in the direction transverse thereto, the segmental members being urged towards said end position against rigid abutment means by flexure of said cross-section.

According to another aspect of the invention, there is provided a rotary machine having a plurality of segmental members projecting displaceably from one part of the machine for co-operation with another part of the machine relatively rotatable to said one part, said members being biased towards rigid abutment means defining an end position of projection in their one part by resilient means in the form of at least one circumferentially elongate spring having in a plane containing the axis of rotation a radial cross-section that is substantially smaller in the direction of said displaceability than in the direction transverse thereto, the segmental members being urged towards said end position by flexure of said cross-section.

In its simplest form, the cross-section of the or each spring may be in the shape of a relatively shallow arch, but other configurations are possible. Such a spring may be made in a number of segments, generally of considerably greater circumferential extent than the seal segments, for example, as two halves.

By way of example, the invention will be described in more detail with reference to the accompanying schematic drawings, in which:
Fig. 1 is a cross-section illustrating a sealing means having a mounting arrangement in accordance with the invention in a steam turbine cylinder or housing,
Fig. 2 and 3 are similar cross-sections illustrating modifications of the arrangement in Fig. 1.
Fig. 4 illustrates some alternative configurations of spring in a mounting arrangement according to the invention, and
Fig. 5 is a cross-section of another mounting arrangement for biasing a clearance fit between an axial fan disc and the fan blades on that disc.

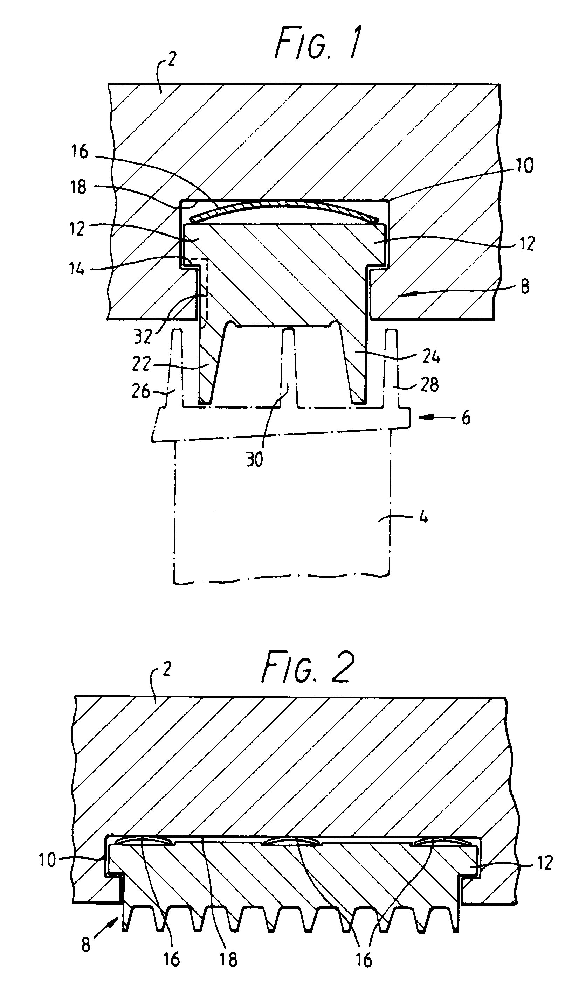

In Fig. 1, the turbine cylinder or housing 2 is shown only fragmentarily and it encloses the rotary spool (not shown) of the turbine which, in the conventional manner accomodates a number of blade discs, the tip of one blade 4 being shown in the drawing. Between the blade disc and the housing a clearance seal is formed by a circumferential blade shroud 6 fixed to the blade tips and a stationary seal ring formed as a series of segmental seal members 8, located in a circumferential slot 10 in the inner wall of the turbine cylinder.

The slot 10 has a T-section and the segments 8 are formed with side ribs 12 that are located in the wider base of the slot and that make contact with the radially outward facing walls 14 of the slot to determine a position of maximum projection of the segments from the slot. To maintain the segments in contact with the slot walls 14, a backing spring 16 is placed in the slot behind the segments.

The backing spring 16 takes the form of a hoop that extends substantially continuously around the turbine cylinder. It can be made in two or more segments, but these will each generally have a considerably greater circumferential extent than the seal segments. The cross-section of the hoop spring is a shallow arch, with its side edges bearing on the side ribs 12 of the segments and its central portion bearing on the radially inwardly directed face 18 of the base of the slot. It will typically be made of a relatively thin material as it relies upon its curvature for its stiffness. It will be understood that the assembly engagements flex the spring cross-section; it will have a somewhat more highly arched shape in its free state.

The disc shroud and the stationary seal ring act together to provide a labyrinth seal, with fins 22,24 projecting radially inwards from the seal ring to lie as a small clearance from the base wall of the shroud 6 and three radially outwardly projecting fins on the shroud, one pair 26,28 straddling the seal ring fins 22,24 axially and a central fin 30 between the seal ring fins. The radial clearance between the central fin 30 and the adjacent face of the seal ring is similar to that between the seal ring fins 22,24 and the shroud. The outer shroud, fins 26,28 have a slightly greater clearance with the adjacent inside face of the turbine cylinder 2. The form and disposition of the sealing fins can be varied as required and any known configuration can be employed.

Before start-up of the turbine, the seal segments are held against the slot walls 14 purely by the force of the spring 16. In the operation of the turbine, the segments are displaced axially in a downstream direction because of differential steam pressure across the blade disc. Axial sealing contact is thus established between the segments and the downstream face of their slot. The resulting gap at the upstream face permits steam to pressurise the annulus containing the seal spring, and this effect can be further ensured by providing passageways 32 for the steam, eg. by chamfering upstream corners of the segments. Thus, in service, both steam differential pressure and spring force act to retain the seal in the design position. The arched hoop spring produces inherently strong forces for small deflections and those forces are evenly distributed around the entire periphery of the seal.

The characteristics of the spring permit the seal segments to deflect in a relatively smooth manner in the event of excessive shaft eccentricity, since local flexure of the spring occurs readily. Nevertheless, the inherent strength of the spring configuration rapidly restores the position of each segment to minimise the leakage past the seal.

Assembly of the stationary seal ring with its hoop spring is very simple. For convenience, the spring can be made in two halves, especially when, as is common, the turbine cylinder is a two-part casting split along a diametrical plane. Where required, the segmental seal members can be inserted with the spring already in place by sliding each seal member tangentially into the slot. It will usually be the case that the spring will be very easily flexible locally so as to facilitate the entry of the seal members. Replacement of the spring is also a simple operation if the new component is linked to the old component so that removal of the old draws the new into position. Above a certain diameter it will generally not be necessary to preform the spring to its hoop shape as it will readily flex to the radius of the curvature of its slot. Nevertheless, once mounted in place, it can provide substantial strength in the radial direction.

The axial length of a seal is not a limiting factor. Fig. 2 illustrates the use of a number of hoop springs 16 in parallel to support wider seal segments. The manner of operation is exactly as described with reference to Fig. 1 and similar parts are indicated by the same reference numbers.

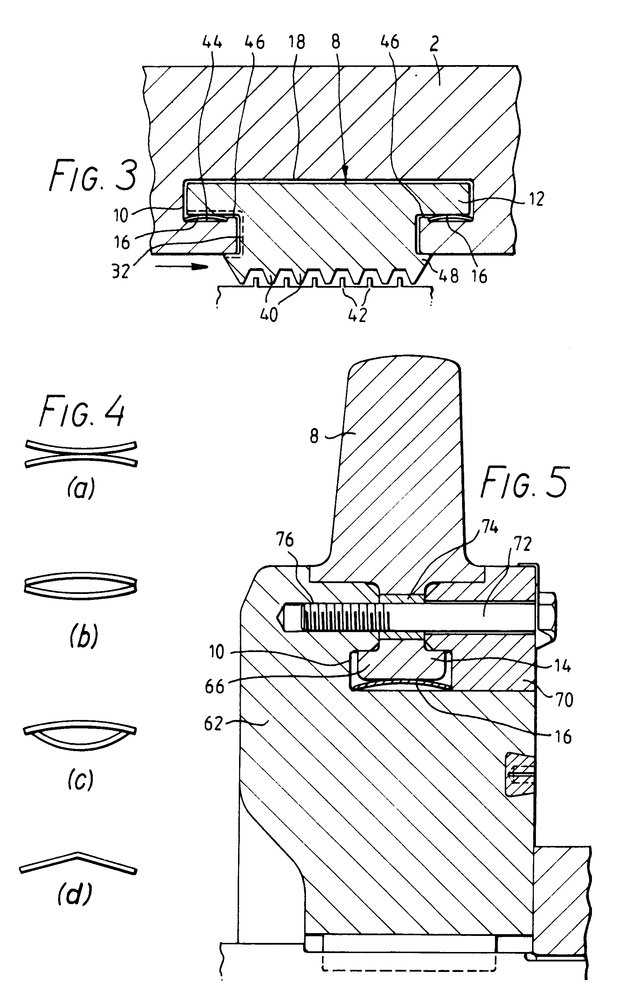

Fig. 3 shows a seal assembly in which increased radial clearance is provided under start-up conditions. In Fig. 3, similar parts to those already described are indicated by the same reference numbers. Hoop springs 16 are now positioned to act on the side ribs 12 of the seal members 8, urging the members into the slot, so as to increase the radial clearances of the two sets of fins 40,42 respectively. For this purpose the T-section slot 10 has outward facing walls 44. Integral peripheral end ribs 46 on those walls limit the inward radial movement of the seal members 8 and locate the springs 16 axially on the walls. The seal members 8 have assembly backstops in the form of extensions 48 that project beyond the open ends of the slot 10. As in the preceding examples, in operation, differential pressure axially of the seal results in pressurisation of the annulus to urge the seal members radially from the slot 10 and minimise the radial clearances of the fins.

A significant feature of the illustrated configurations is the very small radial depth required for the hoop springs. In the case of an existing construction having a fixed, i.e. unsprung, stationary seal ring, located in a retaining slot such as the illustrated T-slot 10, it will be possible in many cases to provide a sprung seal of the form described in Fig. 1 or 2 without having to machine deeper T-slots. Any marginal reduction in the radial depth of the segments to accommodate the spring will not usually result in any unacceptable weakening of the segments. The spring sealing arrangement can therefore be substituted for a previous unsprung arrangement using the existing slots in the cylinder or other stationary member.

In the case of new designs, there is the advantage that the cylinder or housing can have a smaller wall thickness than would be required if a conventional sprung seal ring construction were mounted in it. In addition, there is a substantial reduction in assembly time as compared to fixed seals, which require hand dressing to ensure a good fit. The increased seal efficiency can thus be accompanied by a reduction of overall costs.

Where there is no undue restriction of the space available for the spring, as in a new machine, it is possible to increase the capacity for radial movement, if required doubling up the hoop springs so that they lie in the space one radially outside the other. Fig. 4 illustrates some possibilities. Thus, they may be arranged to lie with their convex faces bearing on each other, as in Fig. 4a, or directed away from each other as in Fig. 4b to bear on the seal segments and inner face of the slot respectively, or they may be given different curvature cross-sections and, as shown in Fig. 4c, have the section with the small radius of curvature resting with the ends of the section on the convex face of the spring having the larger radius of curvature.

Fig. 4d illustrates a further alternative within the scope of the invention in which the hoop spring cross-section has a V-section with a more or less sharp central transition. It will be understood that other cross-sectional forms can be employed, as desired, composed of straight portions with or without curved portions.

In Fig. 5, a disc 62 of an axial cooling fan assembly has blades 64, formed singly or in groups, mounted in an annular configuration in which the individual blades or groups of blades form segmental parts. The roots 66 of the blades are held in an annular recess 68 formed between the disc 62 and a clamping ring 70 secured to the disc by bolts 72. The bolts 72 pass axially through bushes 74 in the blade roots 66 to engage threaded bores 76 in the disc 62. The root 66 has a T-form cross-section axially of the disc so that the blades are held positively in the radial direction by shoulders 78 of the recess 68.

It is customary, however, to provide static radial clearances between the blade roots and the retaining recess 68, in particular the bushes 74 are a loose fit in the blade roots and there is also some radial free play of blades in the recesses. When running at speed, the blades are located securely by centrifugal force but at very low speeds they can move in their mountings because of the free play. If the machine has to rotate at such low speeds for long periods, the blade root mountings can be damaged by those movements.

To prevent damage from this cause, a hoop spring, again indicated by the reference 16, is placed in the retaining recess under the root of the blade. The customary radial clearances can be maintained, but the blades will be biased to their outer position even when the fan is stationary. Arrangements such as described with reference to Fig. 4 for increasing the capacity for radial movement may of course be employed if required.

## Claims

1. A mounting arrangement for the relative location of parts (2,8;62,64) of a rotary machine, said arrangement comprising a plurality of segmental members (8;64) held in a circumferential recess (10;68) in a carrier (2;62) from which they project with limited displaceability in their direction of projection, resilient means (16) in said recess bearing on the segmental members to urge them towards one end position in the direction of said displaceability, said resilient means being in the form of at least one circumferentially elongate spring (16) characterised in that the spring (16) has, in a plane containing the axis of rotation, a radial cross-section that is substantially smaller in the direction of said displaceability than in the direction transverse thereto, the segmental members (8) being urged towards said end position against rigid abutment means (14;18) by flexure of said spring cross-section.

2. A mounting arrangement according to claim 1 wherein the spring (16) has an arched cross-section.

3. A mounting arrangement according to claim 1 or claim 2 wherein the spring (16) comprises a plurality of segments.

4. A mounting arrangement according to claim 3 wherein said spring segments are each of greater circumferential extent than their associated segmental members (8;64).

5. A mounting arrangement according to any one of the preceding claims wherein the recess (10;68) in said carrier has a width that is less at the mouth of the recess than at an inner region thereof, said at least one spring (16) being located in said inner region.

6. A mounting arrangement according to any one of the preceding claims wherein the or each spring (16) extends over substantially the full width of the region of the recess (10;68) in which it is located and said spring urges the segmental members (16) to project from the recess.

7. A mounting arrangement according to claim 6 wherein said at least one spring (16) bears on the segmental members (8;64) at positions that lie beyond the extent of the recess mouth axially of the rotary machine.

8. A mounting arrangement according to any one of claims 1 to 5 having a plurality of said springs (16) at different locations with respect to the rotary axis.

9. A mounting arrangement according to any one of the preceding claims having a plurality of said circumferentially elongate springs with respective springs bearing radially upon each other.

10. A mounting arrangement according to any one of claims 1 to 5 wherein shoulders (14) are provided at opposite sides of the mouth of the recess to form a transition to an inner region of the recess, at least one said spring (16) being located between each shoulder and the segmental members to urge said members into the recess.

11. A mounting arrangement according to any one of the preceding claims wherein said segmental members are arranged to provide a seal between said carrier and another part of said machine rotatable relative to the carrier, said members being each urged towards said other part by said at least one spring.

12. A mounting arrangement according to any one of claims 1 to 9 wherein said recess holds radially inner ends of the segmental members in a radially displaceable manner and said at least one spring urges said ends to a radially outer position in the recess.

13. A rotary machine having at least one rotational member located within a housing and sealing means between said member and housing comprising a mounting arrangement according to any one of claims 1 to 11.

14. A rotary machine having a plurality of segmental members projecting displaceably from one part of the machine for co-operation with another part of the machine relatively rotatable to said one part, said members being biased towards rigid abutment means (14;18) defining an end position of projection in their one part by resilient means in the form of at least one circumferentially elongate spring (16) characterised in that the spring (16) has, in a plane containing the axis of rotation, a radial cross-section that is substantially smaller in the direction of said displaceability than in the direction transverse thereto, the segmental members (8) being urged towards said end position by flexure of said cross-section.

## Patentansprüche

1. Montageanordnung zur relativen Anordnung von Teilen (2,8;62,64) einer rotierenden Maschine, wobei die genannte Anordnung eine Vielzahl von segmentförmigen Elementen (8;64) umfaßt, die in einer Umkreisausnehmung (10;68) in einem Träger (2;62) gehalten wird, von dem sie mit beschränkter Versetzbarkeit in ihrer Auskragungsrichtung vorragen, wobei elastische Mittel (16) in der genannten Ausnehmung gegen die segmentförmigen Elemente anliegen, um sie gegen eine Endposition in der Richtung der genannten Versetzbarkeit hin zu drängen, wobei die genannten elastischen Mittel in der Form von zumindest einer im Umkreis länglichen Feder (16) vorliegen, dadurch gekennzeichnet, daß die Feder (16) in einer die Rotationsachse enthaltenden Ebene einen radialen Querschnitt aufweist, der in der Richtung der genannten Versetzbarkeit wesentlich kleiner ist als in der Querrichtung dazu, wobei die segmentförmigen Elemente (8) durch Biegung des genannten Federquerschnitts gegen die genannte Endposition hin gegen starre Anliegemittel (14;18) gedrängt werden.

2. Montageanordnung nach Anspruch 1, worin die Feder (16) einen gewölbten Querschnitt aufweist.

3. Montageanordnung nach Anspruch 1 oder 2, worin die Feder (16) eine Vielzahl von Segmenten umfaßt.

4. Montageanordnung nach Anspruch 3, worin die genannten Federsegmente jeweils eine größere Umfangsausdehnung aufweisen als die ihnen zugeordneten segmentförmigen Elemente (8; 64)

5. Montageanordnung nach einem der vorhergehenden Ansprüche, worin die Ausnehmung (10;68) im genannten Träger eine Breite aufweist, die an der Mündung der Ausnehmung geringer ist als an einem inneren Bereich davon, wobei die genannte zumindest eine Feder (16) im genannten inneren Bereich angeordnet ist.

6. Montageanordnung nach einem der vorhergehenden Ansprüche, worin die oder jede Feder (16) sich über im wesentlichen die gesamte Breite des Bereichs der Ausnehmung (10;68) erstreckt, in dem sie angeordnet ist, und die genannte Feder die segmentförmigen Elemente (16) zum Herausragen aus der Ausnehmung drängt.

7. Montageanordnung nach Anspruch 6, worin die genannte zumindest eine Feder (16) an Positionen an den segmentförmigen Elementen (8;64) anliegt, die jenseits der Ausdehnung der Ausnehmungsmündung radial zur rotierenden Maschine liegen.

8. Montageanordnung nach einem der Ansprüche 1 bis 5, die eine Vielzahl der genannten Federn (16) an verschiedenen Stellen bzw. Positionen bezogen auf die Rotationsachse aufweist.

9. Montageanordnung nach einem der vorhergehenden Ansprüche, die eine Vielzahl der genannten im Umkreis länglichen Federn aufweist, wobei jeweilige Federn radial über- bzw. gegeneinander anliegen.

10. Montageanordnung nach einem der Ansprüche 1 bis 5, worin Schultern (14) an gegenüberliegenden Seiten der Mündung der Ausnehmung vorgesehen sind, um einen Übergang zu einem inneren Bereich der Ausnehmung zu bilden, wobei zumindest eine genannte Feder (16) zwischen jeder Schulter und den segmentförmigen Elementen angeordnet ist, um die genannten Elemente in die Ausnehmung zu drängen.

11. Montageanordnung nach einem der vorhergehenden Ansprüche, worin die genannten segmentförmigen Elemente so angeordnet sind, daß eine Dichtung bzw. Sperre zwischen dem genannten Träger und einem anderen Teil der genannten Maschine geschaffen wird, der relativ zum Träger drehbar ist, wobei die genannten Elemente durch die genannte zumindest eine Feder jeweils gegen den genannten anderen Teil gedrängt werden.

12. Montageanordnung nach einem der Ansprüche 1 bis 9, worin die genannte Ausnehmung radial innere Enden der segmentförmigen Elemente in einer radial verschieb- bzw. versetzbaren Weise hält und die genannte zumindest eine Feder die genannten Enden in eine radial äußere Position in der Ausnehmung drängt.

13. Rotierende Maschine, die zumindest ein innerhalb eines Gehäuses angeordnetes drehbares Element aufweist, und Dicht- bzw. Sperrmittel zwischen dem genannten Element und Gehäuse, die eine Montageanordnung nach einem der Ansprüche 1 bis 11 umfassen.

14. Rotierende Maschine, die eine Vielzahl von segmentförmigen Elementen aufweist, die aus einem Teil der Maschine versetzbar bzw. verschiebbar hervorragen, um mit einem anderen Teil der Maschine zusammenzuwirken, der relativ zum genannten einen Teil drehbar ist, wobei die genannten Elemente gegen starre Anliegemittel (14;18) hin vorgespannt sind, die eine Endposition des Vorragens in ihrem einen Teil durch elastische Mittel in der Form von zumindest einer länglichen Umfangs-Feder (16) begrenzen bzw. definieren, dadurch gekennzeichnet, daß die Feder (16) in einer Ebene, welche die Rotationsachse enthält, einen radialen Querschnitt aufweist, der in der Richtung der genannten Versetz- bzw. Verschiebbarkeit wesentlich kleiner ist als in der Querrichtung dazu, wobei die segmentförmigen Elemente (8) durch Biegung des genannten Querschnitts gegen die genannte Endposition hin gedrängt werden.

## Revendications

1. Agencement de montage pour la localisation relative de parties (2, 8 ; 62, 64) d'une machine rotative, ledit agencement comprenant une pluralité d'éléments segmentaires (8 ; 64) maintenus dans un évidement circonférentiel (10 ; 68) dans un élément de support (2 ; 62) duquel ils font saillie avec une possibilité de déplacement limitée dans leur direction de projection, des moyens élastiques (16) dans ledit évidement portant sur les éléments segmentaires afin de les solliciter vers une position extrême dans la direction de ladite possibilité de déplacement, lesdits moyens élastiques se présentant sous la forme d'au moins un ressort (16) allongé circonférentiellement, caractérisé en ce que le ressort (16) présente, dans un plan contenant l'axe de rotation, une section transversale radiale qui est essentiellement plus petite dans la direction de ladite possibilité de déplacement que dans la direction transversalement à celle-ci, les éléments segmentaires (8) étant sollicités vers ladite position extrême contre des moyens de butée rigides (14 ; 18) par flexion de ladite section transversale de ressort.

2. Agencement de montage selon la revendication 1, dans lequel le ressort (16) présente une section transversale arquée.

3. Agencement de montage selon la revendication 1 ou la revendication 2, dans lequel le ressort (16) comprend une pluralité de segments.

4. Agencement de montage selon la revendication 3, dans lequel lesdits segments de ressort ont chacun une étendue circonférentielle plus grande que leurs éléments segmentaires associés (8 ; 64).

5. Agencement de montage selon l'une des revendications précédentes, dans lequel l'évidement (10 ; 68) dans ledit élément de support a une largeur qui est plus réduite à l'embouchure de l'évidement qu'à une région interne de celui-ci, ledit, au moins, un ressort (16) étant positionné dans ladite région interne.

6. Agencement de montage selon l'une des revendications précédentes, dans lequel le ou chaque ressort (16) s'étend sur essentiellement toute la largeur de la région de l'évidement (10 ; 68) dans lequel il est positionné, et ledit ressort sollicite les éléments segmentaires (16) à faire saillie depuis l'évidement.

7. Agencement de montage selon la revendication 6, dans lequel ledit, au moins, un ressort (16) porte sur les éléments segmentaires (8 ; 64) à des positions qui se situent au-delà de l'étendue de l'embouchure d'évidement axialement de la machine rotative.

8. Agencement de montage selon l'une des revendications 1 à 5, présentant une pluralité desdits ressorts (16) à des localisations différentes relativement à l'axe de rotation.

9. Agencement de montage selon l'une des revendications précédentes, possédant une pluralité desdits ressorts allongés circonférentiellement avec des ressorts respectifs portant radialement les uns sur les autres.

10. Agencement de montage selon l'une des revendications 1 à 5, dans lequel des épaulements (14) sont prévus aux côtés opposés de l'embouchure de l'évidement pour former une transition vers une région interne de l'évidement, au moins l'un desdits ressorts (16) étant localisé entre chaque épaulement et les éléments segmentaires pour solliciter lesdits éléments dans l'évidement.

11. Agencement de montage selon l'une des revendications précédentes, dans lequel lesdits éléments segmentaires sont disposés pour réaliser un joint d'étanchéité entre ledit élément de support et une autre partie de ladite machine pouvant tourner relativement audit élément de support, lesdits éléments étant sollicités chacun vers ladite autre partie par ledit, au moins, un ressort.

12. Agencement de montage selon l'une des revendications 1 à 9, dans lequel ledit évidement maintient les extrémités radialement internes des éléments segmentaires d'une manière déplaçable radialement, et ledit, au moins, un ressort sollicite lesdites extrémités vers une position radialement externe dans l'évidement.

13. Machine rotative présentant au moins un élément de rotation positionné à l'intérieur d'un logement et des moyens d'étanchéité entre ledit élément et le logement comprenant un agencement de montage conformément à l'une des revendications 1 à 11.

14. Machine rotative présentant une pluralité d'éléments segmentaires faisant saillie de manière déplaçable à partir d'une partie de la machine pour la coopération avec une autre partie de la machine pouvant tourner relativement à ladite une partie, lesdits éléments étant sollicités vers des moyens de butée rigides (14 ; 18) définissant une position extrême de saillie dans l'une de leurs parties par des moyens élastiques sous la forme d'au moins un ressort allongé circonférentiellement (16), caractérisée en ce que le ressort (16) présente, dans un plan contenant l'axe de rotation, une section transversale radiale qui est essentiellement plus petite dans la direction de ladite possibilité de déplacement que dans la direction transversalement à celle-ci, les éléments segmentaires (8) étant sollicités vers ladite position extrême par flexion de ladite section transversale.
